Europäisches Patentamt

European Patent Office

Office européen des brevets

(11) Veröffentlichungsnummer: **0 136 608**
A2

## (12) EUROPÄISCHE PATENTANMELDUNG

(21) Anmeldenummer: 84111008.3

(22) Anmeldetag: 14.09.84

(51) Int. Cl.⁴: **G 06 F 15/40**

(30) Priorität: 30.09.83 DE 3335562

(43) Veröffentlichungstag der Anmeldung:
10.04.85 Patentblatt 85/15

(84) Benannte Vertragsstaaten:
AT DE FR GB IT

(71) Anmelder: Siemens Aktiengesellschaft
Berlin und München Wittelsbacherplatz 2
D-8000 München 2(DE)

(72) Erfinder: Hahne, Klaus, Dipl.-Ing.
Paul-Klee-Strasse 4
D-8000 München 71(DE)

(54) Quasi-assoziativer Speichermodul.

(57) Ein quasi-assoziativer Speichermodul, für den vorgesehen ist, daß ein Speicher mit wahlfreiem Zugriff RAM (MS) und ein elektronischer zyklischer Speicher EZS (DS) vorhanden sind, welche Speicher (MS, DS) synchron betrieben werden, daß jeder zu speichernde Datensatz in einen Markierungsbereich (MB) und einen Datenbereich (DB) unterteilt ist, wobei jeder Markierungsbereich aus einer Vielzahl von Datensätzen in dem als Markierungsspeicher dienenden Speicher mit wahlfreiem Zugriff RAM (MS) und jeder Datenbereich aus der Vielzahl von Datensätzen in dem als Datenspeicher dienenden elektronischen zyklischen Speicher EZS (DS) gespeichert wird, und daß der Markierungsbereich jeweils eine Information darüber enthält, ob ein betreffender Datensatz zu der Menge der gesuchten Datensätze gehört.

EP 0 136 608 A2

./...

**RAM**
4 Kbyte

| 1. SATZ IN S1 | 1. SATZ IN S2 | - - - | 1. SATZ IN S16 |
|---|---|---|---|
| 2. SATZ IN S1 | ⋮ S2 | - - - | ⋮ S16 |
| - - - | - - - | - - - | - - - |
| K-TER SATZ IN S1 | ⋮ S2 | - - - | ⋮ S16 |

MS

STEUERUNG

**EZS (CCD)**
128 Kbyte

CHIP 1  CHIP 2  CHIP 16

4 Kbit   Z1   S1

S2

⋮   ⋮   ⋮   S16

DS

QUAM

16bit  DATENSATZ-PUFFER  16bit

| MB-ADR. | MB | DB |
|---|---|---|
| 12 bit | 16 bit | 1Kbyte |

SIEMENS AKTIENGESELLSCHAFT
Berlin und München

Unser Zeichen
VPA 83 P 1800 E

## Quasi-assoziativer Speichermodul

Bei der Abarbeitung von Mengenspezifikationen, wie sie bei modernen Datenmodellen und Programmiersprachen auftreten, besteht ein wesentliches technisches Problem darin, diese kostengünstig mit heute verfügbaren Speicherbausteinen zu realisieren. Typisch für die Abarbeitung von Mengenspezifikationen ist, daß die Reihenfolge, in der die einzelnen Datensätze verarbeitet werden, unbestimmt ist.

Nach dem Stand der Technik wird das Problem durch den Einsatz schneller, aufwendiger Arbeitsspeicher gelöst.

Der vorliegenden Erfindung liegt die Aufgabe zugrunde, einen Speichermodul mit verhältnismäßig geringem Aufwand zu schaffen, der die Abarbeitung von Mengenspezifikationen gestattet.

Die der Erfindung zugrundeliegene Aufgabe wird durch einen quasi-assoziativen Speichermodul QAM gelöst, der durch die in dem Patentanspruch 1 angegebenen Merkmale gekennzeichnet ist.

Vorteilhafte Weiterbildungen sind durch die Merkmale der Unteransprüche charakterisiert.

Die Erfindung löst das Problem durch das Vorsehen eines Markierungsbereiches für jeden Datensatz und die Ablage von Markierungs- und Datenbereich in Speichern unterschiedlicher Technologie, die synchron betrieben werden. Jeder gespeicherte Datensatz besteht aus einem Markierungsbereich und einem Datenbereich. Der Markierungsbereich enthält eine Information darüber, ob ein Datensatz zur Menge der gesuch-

Pap

83 P 1800 E
0136608

ten Sätze gehört. Die Markierungsbereiche aller Sätze werden in einem schnellen Speicher mit wahlfreiem Zugriff RAM, die Datenbereiche in einem aufwandsgünstigen elektronischen zyklischen Speicher EZS abgelegt.

Im folgenden wird die vorliegende Erfindung anhand einer ein bevorzugtes Ausführungsbeispiel betreffenden Figur im einzelnen beschrieben.

Elektronische zyklische Speicher EZS DS bestehen aus geschlossenen Schleifen S, in denen die Information in Form elektrischer Ladungen oder magnetischer Blasen gespeichert ist. Ein derart konzipierter Speicherbaustein enthält mehrere synchron rotierende Schleifen S, von denen zu jedem Zeitpunkt genau eine frei wählbare über eine Schreib-/Lesestation mit der 1 bit breiten Schnittstelle des Bausteins verbunden ist. Aus m Speicherbausteinen zu je n Schleifen S läßt sich ein elektronischer zyklischer Speicher EZS so aufbauen, daß n parallele "Zylinder" Z von je m bit Breite entstehen. Speichert man die Datenbereiche DB der Datensätze hintereinander in solchen "Zylindern" Z und die dazugehörigen Markierungsbereiche MB in einem Speicher mit wahlfreiem Zugriff RAM MS, so lassen sich die beiden Speicher folgendermaßen synchron betreiben:

Während die Markierungsbereiche im RAM MS seriell auf Treffer untersucht werden, rotieren die entsprechenden Datenbereiche in verschiedenen, parallelen "Zylindern" Z. Durch phasenrichtigen Betrieb beider Speicher MS, DS läßt sich erreichen, daß nach der Untersuchung jedes Markierungsbereiches MB der dazugehörige Datenbereich DB unmittelbar vor den m Lesestationen steht und sofort ausgelesen werden kann, falls es sich um ein Element der Ergebnismenge handelt. Zur genauen phasenmäßigen Anpassung ist eine Versetzung logisch benachbarter "Zylinder" Z in Drehrichtung um die Lese- und Verarbeitungszeit eines Markierungsbereichs MB erforderlich. Das Schreiben eines aus Markierungs- und

Datenbereich MB, DB bestehenden Datensatzes erfolgt an den nächsten freien Speicherplatz in irgendeinem der n parallelen "Zylinder" Z.

Freie Speicherplätze sind durch ein bestimmtes Bit des Markierungsbereiches MB gekennzeichnet. Das Rückschreiben von Datensätzen mit verändertem Datenbereich DB erfolgt ebenfalls an den nächsten freien Speicherplatz. Der ursprüngliche Datensatz wird durch Setzen eines Frei-Bits im Markierungsbereich MB gelöscht. Eine Änderung des Markierungsbereiches MB eines Datensatzes ist unabhängig von der momentanen Schleifenstellung jederzeit möglich, da der RAM direkt adressierbar ist. Dies erlaubt eine Mengenverarbeitung, bei der ein oder mehrere Prozessoren markierte Datensätze auf ein Kriterium hin untersuchen und bei Erfüllung dieser Kriterien eine neue Markierung setzen. Eine aufwendigere Umspeicherung von Zwischenergebnissen läßt sich so vermeiden.

Der Vorteil der beschriebenen Speicherkombination liegt in der bei Mengenverarbeitung gegenüber konventioneller Adressierung, wo mit einer mittleren Positionierzeit einer halben Schleifendrehung gerechnet werden muß, um etwa 2 Größenordnungen verringerten mittleren Zugriffszeit. Dieser Effekt kommt zum einen durch den parallelen Betrieb der Speicherschleifen bzw. "Zylinder", zum anderen durch die Verwendung der Markierungen zustande. Das Prinzip des beschriebenen, erfindungsgemäßen quasi-assoziativen Speichermoduls QAM ist für beide derzeit bekannten EZS, d. h. sowohl für magnetische Blasenspeicher MBS als auch für ladungsgekoppelte Schaltkreise (charge-coupled divices) CCD geeignet. MBS sind nichtflüchtig, und deren Speicherschleifen rotieren nur, wenn eine Anforderung an den Speicher vorliegt. Demgegenüber müssen CCD wegen ihrer Flüchtigkeit mit einem Mindesttakt von ca. 1 MHz rotieren. Da die Reihenfolge, in der die Datensätze bearbeitet werden, voraussetzungsgemäß unbestimmt ist, kann die Verarbeitung in jeder beliebigen

0136608

Schleifenstellung begonnen werden. Zur Kennzeichnung der bereits verarbeiteten Sätze wird ein eigenes Markierungs-bit gesetzt.

9 Patentansprüche
1 Figur

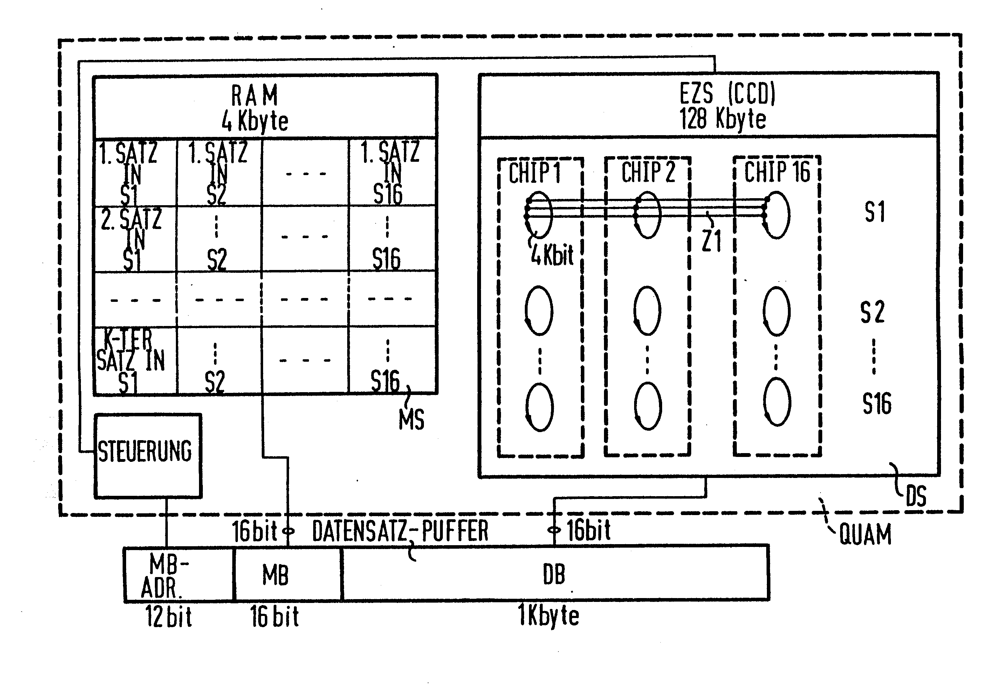

Patentansprüche:

1. Quasi-assoziativer Speichermodul, dadurch g e - k e n n z e i c h n e t , daß ein Speicher mit wahlfreiem Zugriff RAM (MS) und ein elektronischer zyklischer Speicher EZS (DS) vorgesehen sind, welche Speicher (MS, DS) synchron betrieben werden, daß jeder zu speichernde Datensatz in einen Markierungsbereich (MB) und einen Datenbereich (DB) unterteilt ist, wobei jeder Markierungsbereich aus einer Vielzahl von Datensätzen in dem als Markierungsspeicher dienenden Speicher mit wahlfreiem Zugriff RAM (MS) und jeder Datenbereich aus der Vielzahl von Datensätzen in dem als Datenspeicher dienenden elektronischen zyklischen Speicher EZS (DS) gespeichert wird, und daß der Markierungsbereich jeweils eine Information darüber enthält, ob ein betreffender Datensatz zu der Menge der gesuchten Datensätze gehört.

2. Quasi-assoziativer Speichermodul nach Anspruch 1, da-durch g e k e n n z e i c h n e t , daß der elektroni-sche zyklische Speicher EZS (DS) aus einer Vielzahl von geschlossenen Schleifen (S1 ... Sn) besteht, in denen Information in Form elektrischer Ladungen gespeichert ist.

3. Quasi-assoziativer Speichermodul nach Anspruch 1, da-durch g e k e n n z e i c h n e t , daß der elektroni-sche zyklische Speicher EZS (DS) aus einer Vielzahl von geschlossenen Schleifen (S1 ... Sn) besteht, in denen Information in Form magnetischer Blasen gespeichert ist.

4. Quasi-assoziativer Speichermodul nach Anspruch 2 oder 3, dadurch g e k e n n z e i c h n e t , daß eine Spei-chereinheit des elektronischen zyklischen Speichers EZS (DS) mehrere synchron rotierende Schleifen (S) enthält, von denen zu jedem Zeitpunkt genau eine frei wählbare über eine Schreib/Lese-Station mit einer 1-Bit-breiten

0136608

Schnittstelle der Speichereinheit (SE) verbunden ist, und daß aus m Speichereinheiten (S1 ... S16) zu je n Schleifen (S1 ... S16) n parallele "Zylinder" (Z) mit jeweils m bit Breite gebildet sind.

5. Quasi-assoziativer Speichermodul nach einem der vorhergehenden Ansprüche, dadurch g e k e n n z e i c h n e t , daß zum Zwecke einer exakten phasenmäßigen Anpassung der Lese- bzw. Schreibvorgänge eine Versetzung logisch benachbarter "Zylinder" in ihrer Drehrichtung um die Lese- und Verarbeitungszeit eines Markierungsbereiches (MB) vorgesehen ist.

6. Quasi-assoziativer Speichermodul nach Anspruch 4, dadurch g e k e n n z e i c h n e t , daß das Schreiben eines Datensatzes an den nächsten freien Speicherplatz in einem beliebigen der n parallelen "Zylinder" (Z) vorgenommen wird.

7. Quasi-assoziativer Speichermodul nach Anspruch 6, dadurch g e k e n n z e i c h n e t , daß freie Speicherplätze durch ein bestimmtes Bit des Markierungsbereiches (MB) gekennzeichnet sind.

8. Quasi-assoziativer Speichermodul nach Anspruch 6, dadurch g e k e n n z e i c h n e t , daß das Rückschreiben von Datensätzen mit verändertem Datenbereich (DB) an den nächsten freien Speicherplatz erfolgt und daß der ursprüngliche betreffende Datensatz durch Setzen eines Frei-Bits in dem Markierungsbereich "gelöscht" wird.

9. Quasi-assoziativer Speichermodul nach einem der vorhergehenden Ansprüche, dadurch g e k e n n z e i c h n e t , daß zur Kennzeichnung bereits verarbeiteter Datensätze ein besonderes Markierungs-Bit vorgesehen ist.

RAM
4 Kbyte

EZS (CCD)
128 Kbyte

| 1. SATZ IN S1 | 1. SATZ IN S2 | - - - | 1. SATZ IN S16 |
|---|---|---|---|
| 2. SATZ IN S1 | ⋮ S2 | - - - | ⋮ S16 |
| - - - | - - - | - - - | - - - |
| K-TER SATZ IN S1 | ⋮ S2 | - - - | ⋮ S16 |

MS

CHIP 1  CHIP 2  CHIP 16

4 Kbit

Z1

S1

S2

S16

STEUERUNG

DS

QUAM

16 bit    DATENSATZ-PUFFER    16 bit

| MB-ADR. | MB | DB |
|---|---|---|
| 12 bit | 16 bit | 1 Kbyte |